# EUROPÄISCHE PATENTANMELDUNG

(11) **EP 2 023 122 A2**
(43) Veröffentlichungstag der Anmeldung: **11.02.2009**
(21) Anmeldenummer: 08013103.0
(22) Anmeldetag: 21.07.2008
(51) Int. Cl.: G01N 21/15, G01N 21/35, B30B 11/00, B30B 11/08, G01F 17/00

(54) **System zur Überprüfung von Tabletten**

(30) Priorität: 24.07.2007 EP 07014518
(71) Anmelder: Uhlmann Visio Tec GmbH, 88471 Laupheim (DE)
(72) Erfinder: Mertens, Richard, 88471 Laupheim (DE); Prinz, Heino, Dr., 88471 Laupheim (DE)
(74) Vertreter: Wächter, Jochen

(57) **Zusammenfassung**

Das System zur Überprüfung von Tabletten weist eine NIR-Messvorrichtung (3) zur Bestimmung der Konzentration mindestens eines Wirkstoffs in den Tabletten (4) auf. Außerdem weist das System einen Sensor (2) zur Volumenbestimmung der jeweiligen Tablette (4) auf, sowie eine Steuerungsvorrichtung (8), welche geeignet ist, die tatsächliche Wirkstoffdosis der Tablette (4) unter Berücksichtigung der von der NIR-Messvorrichtung (3) und dem Sensor (2) zur Volumenbestimmung ermittelten Daten zu berechnen. Ein entsprechendes Verfahren zur Überprüfung von Tabletten ist ebenfalls beschrieben.

## Beschreibung

Die Erfindung betrifft ein System zur Überprüfung von Tabletten.

Üblicherweise werden Tabletten mittels Tablettenpressen hergestellt, die meist als Rundläufer-Tablettenpressen ausgebildet sind. Dabei erfolgt zunächst die Befüllung der Presshöfe der Tablettenpresse mit einer bereits vorgemischten pulverförmigen Substanz, und anschließend pressen zwei Pressstempel geeigneter Form das Pulver zu einer gewünschten Tablettenform. Anschließend wird die fertige Tablette aus der Rundläuferpresse ausgeschleust und meist in einen Behälter geleitet, in dem eine Vielzahl von Tabletten zur Zwischenlagerung aufgenommen wird. Die Tabletten aus dem Behälter werden anschließend auf ihre Qualität hin untersucht und einer Verpackungsanlage zugeführt.

Dabei müssen sorgfältige Untersuchungen durchgeführt werden, da für pharmazeutische Produkte strenge Qualitätskriterien eingehalten werden müssen. Insbesondere muss die Dosis an aktivem Wirkstoff unbedingt innerhalb der Zulassungstoleranz liegen. Ein anderer Parameter ist die Presshärte der Tablette. Die quantitative Bestimmung bzw. die Härtebestimmung erfolgt üblicherweise stichprobenartig und in Form einer zerstörenden Prüfung. Als Analysemethoden werden bevorzugt flüssigchromatographische, gaschromatographische oder auch spektroskopische Verfahren eingesetzt, die zum Teil einer Probenaufarbeitung bedürfen. Zur Härtemessung wurde meist eine zerstörende mechanische Festigkeitsanalyse durchgeführt. Diese Verfahren zeichnen sich durch eine relativ hohe Präzision aus, die Analysegeschwindigkeit ist allerdings sehr gering. Daher sind diese Verfahren nicht geeignet, ein schnelles Ergebnis für jede Tablette oder während des Produktionsvorgangs selbst zu liefern.

Um schon während des Herstellungsprozesses der Tabletten quantitative Aussagen über die Konzentration des Wirkstoffes in jeder einzelnen produzierten Tablette treffen zu können, ist es beispielsweise aus der EP 1 600 761 A1 oder der EP 1 568 480 A2 bekannt, eine Nahinfrarot (NIR)-Messvorrichtung in eine Tablettenpresse zu integrieren, die eine Analyse der Zusammensetzung von sich bewegenden Tabletten in Echtzeit durchführen kann. Damit wurde es zum ersten Mal möglich, Tabletten lückenlos und unmittelbar nach ihrer Herstellung spektroskopisch zu untersuchen. Andere NIR-Messvorrichtungen untersuchen die Tabletten außerhalb der Tablettenpresse während ihres Transports zur Verpackungsanlage.

Allerdings kann die NIR-Spektroskopie nicht alle für die Qualitätsprüfung relevanten Daten liefern, sodass nachgelagert immer noch andere Untersuchungsmethoden anzuwenden sind, um die tatsächliche Wirkstoffdosis in jeder Tablette ermitteln zu können. In diesem Zusammenhang ist beispielsweise ein Sensor zur Volumenmessung aus der EP 1 193 177 A1 bekannt.

Der Erfindung liegt die Aufgabe zugrunde, ein System zur Überprüfung von Tabletten zu schaffen, das einen hohen Durchsatz besitzt, eine quantitative Wirkstoffdosisbestimmung jeder einzelnen Tablette gewährleistet, sehr sicher und zuverlässig arbeitet und Fehler im Herstellungsprozess schnell entdeckt.

Außerdem soll ein entsprechendes Verfahren zur Überprüfung von Tabletten geschaffen werden.

Diese Aufgabe wird durch die Merkmale des Anspruchs 1 bzw. des Anspruchs 8 gelöst.

Erfindungsgemäß weist das System zur Überprüfung von Tabletten eine NIR-Messvorrichtung zur Bestimmung der Konzentration mindestens eines Wirkstoffes in den Tabletten auf. Außerdem umfasst das System einen Sensor zur Volumenbestimmung der jeweiligen Tablette, sowie eine Steuerungsvorrichtung, welche geeignet ist, die absolute Wirkstoffdosis der Tablette unter Berücksichtigung der von der NIR-Messvorrichtung und dem Sensor zur Volumenbestimmung ermittelten Daten zu berechnen.

Vorzugsweise ist die NIR-Messvorrichtung in eine Tablettenpresse integriert. Alternativ kann das erfindungsgemäße System als eine eigenständige Vorrichtung außerhalb der Tablettenpresse im Transportweg der Tabletten verwendet werden. Die Messergebnisse können verwendet werden, um auf Basis des berechneten Wertes Einfluss auf die Steuerung des Herstellungsprozesses der Tabletten zu nehmen.

Aufgrund dieser Kombination von Detektoranordnungen und entsprechender Steuerungsvorrichtungen können zum ersten Mal direkte Aussagen über die Dosierung jeder einzelnen Tablette im Tablettierungsprozess gemacht werden und diese Informationen sogar direkt zur Steuerung von Prozessparametern herangezogen werden.

Eine besonders schnelle Art der NIR-Messvorrichtung umfasst mindestens eine Strahlungsquelle, die Strahlung im nahen Infrarotbereich imitiert, zum Bestrahlen der Tablette; einen Messkopf mit einer darin enthaltenen Strahlungsempfangsvorrichtung, die die durch die Tablette reflektierte Strahlung empfängt; ein Spektrometer zum Empfangen der Strahlung von der Strahlungsempfangsvorrichtung und zum Bereitstellen eines Ausgangssignals entsprechend der Intensität der empfangenen Strahlung bei einer Anzahl unterschiedlicher Wellenlängen; und eine Vorrichtung zur Bestimmung der Konzentration mindestens eines in der Tablette enthaltenen Wirkstoffes auf Basis des Ausgangssignals.

Um Verunreinigungen vorzubeugen und die Untersuchungsbedingungen konstant zu halten, weist der Messkopf der NIR-Messvorrichtung ein NIR-durchlässiges Glasfenster und Öffnungen zum Einblasen eines Luftvorhangs oder zum Absaugen von Luft auf.

Eine besonders schnelle und sichere Art des Sensors zur Volumenbestimmung ist ein kapazitiver Messsensor.

Vorzugsweise weist dieser einen Spannungsgenerator für ein elektrisches Wechselfeld, zwei sich gegenüberliegende Kondensatorplatten und ein Strommessgerät auf.

Zur Einstellung der korrekten Aufnahmezeiten sind die Auslösezeitpunkte der Messungen der NIR-Messvorrichtung mit der Fördergeschwindigkeit der Tablettenpresse korreliert.

Das erfindungsgemäße Verfahren zur Überprüfung von Tabletten weist folgende Schritte auf: Bestimmen der Konzentration mindestens eines Wirkstoffes in den Tabletten mittels einer NIR-Messvorrichtung; Bestimmen des Volumens der jeweiligen Tablette durch einen Sensor; und Berechnen der absoluten Wirkstoffdosis der Tablette unter Berücksichtigung der von der NIR-Messvorrichtung und dem Sensor zur Volumenbestimmung ermittelten Daten.

In einer bevorzugten Ausführungsform weist das Verfahren außerdem den Schritt auf, den Herstellungsprozess der Tabletten auf Basis des berechneten Wertes zu steuern.

Bei der Bestimmung der Wirkstoffkonzentration in der Tablette wird vorzugsweise das gemessene NIR-Spektrum mit einem Modellspektrum verglichen.

Nach der Volumenbestimmung wird das Gewicht der Tablette aus dem bestimmten Volumen der Tablette mit Hilfe von Angaben zur Dichte der gepressten Tablette, die aus der Presskraft der Tablettenpresse und/oder aus dem durch die NIR-Messvorrichtung bestimmten Spektrum ermittelbar sind, bestimmt. Dadurch wird eine hervorragende Grundlage für die Wirkstoffdosisbestimmung in der Tablette geschaffen.

Für das Steuern des Herstellungsprozesses der Tabletten gibt es verschiedene Alternativen, die teilweise in Kombination angewendet werden können: Abschalten der Tablettenpresse; Einstellen der Presskraft der Pressstempel der Tablettenpresse; und Einstellen der Füllmenge oder des Mischungsverhältnisses des Tablettenpulvers.

Weitere Einzelheiten, Merkmale und Vorteile der vorliegenden Erfindung ergeben sich aus der nachfolgenden Beschreibung unter Bezugnahme auf die Zeichnungen.
- Fig. 1: ist eine schematische Perspektivansicht einer Ausführungsform des erfin- dungsgemäßen Systems zur Überprüfung von Tabletten;
- Fig. 2: ist eine schematische Darstellung des Ablaufs der NIR-Messung einschließ- lich einiger Komponenten der NIR-Messvorrichtung sowie der zugehörigen Auswerteelektronik;
- Fig. 3: ist eine schematische, vergrößerte Querschnittsansicht eines Ausschnitts ei- ner Tablettenpresse mit integrierter NIR-Messvorrichtung;
- Fig. 4: ist eine schematische Darstellung des Sensors zur Volumenbestimmung; und
- Fig. 5: ist ein Ablaufdiagramm des Verfahrens zur Überprüfung von Tabletten.

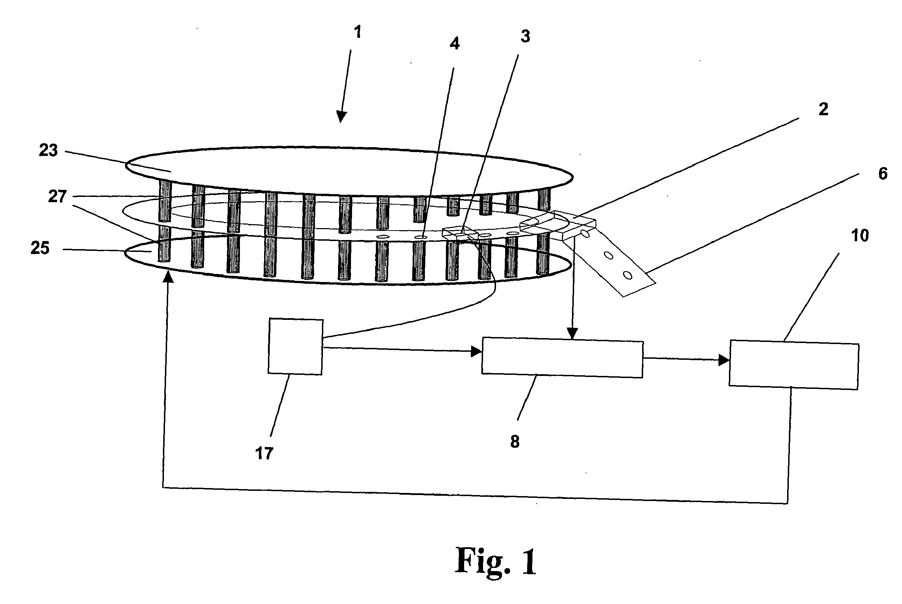

Das in Fig. 1 dargestellte System zur Herstellung und Überprüfung von Tabletten umfasst eine Rundläufer-Tablettenpresse 1, eine darin integrierte NIR-Messvorrichtung 3 sowie einen im Bereich des Auswurfs der Tabletten 4 aus der Tablettenpresse 1 angeordneten Sensor 2 zur Volumenbestimmung der produzierten Tabletten 4. Nach dem Pressvorgang werden die Tabletten 4 zunächst durch die NIR-Messvorrichtung 3 und anschließend durch den Sensor 2 untersucht und beispielsweise über eine Auswurfrinne 6 in einen Behälter oder auf ein Förderband geleitet. Der Sensor 2 ist üblicherweise etwas außerhalb der Tablettenpresse 1 angeordnet, wobei z.B. ein Leitblech die Tabletten 4 aus der Tablettenpresse 1 herausleitet und in Richtung des Sensors 2 bewegt. Eine detaillierte Beschreibung der NIR-Messvorrichtung 3 sowie des Sensors 2 zur Volumenbestimmung folgt später.

Das System weist außerdem eine Steuerungsvorrichtung 8 auf, die mit den Ergebnissen der NIR-Messvorrichtung 3 sowie des Sensors 2 zur Volumenbestimmung versorgt wird und mit der Steuerungsvorrichtung 10 der Tablettenpresse 1 in Verbindung steht. In einer speziellen Ausführungsform kann die Steuerungsvorrichtung 8 auch direkt als Steuerungsvorrichtung 10 der Tablettenpresse 1 fungieren.

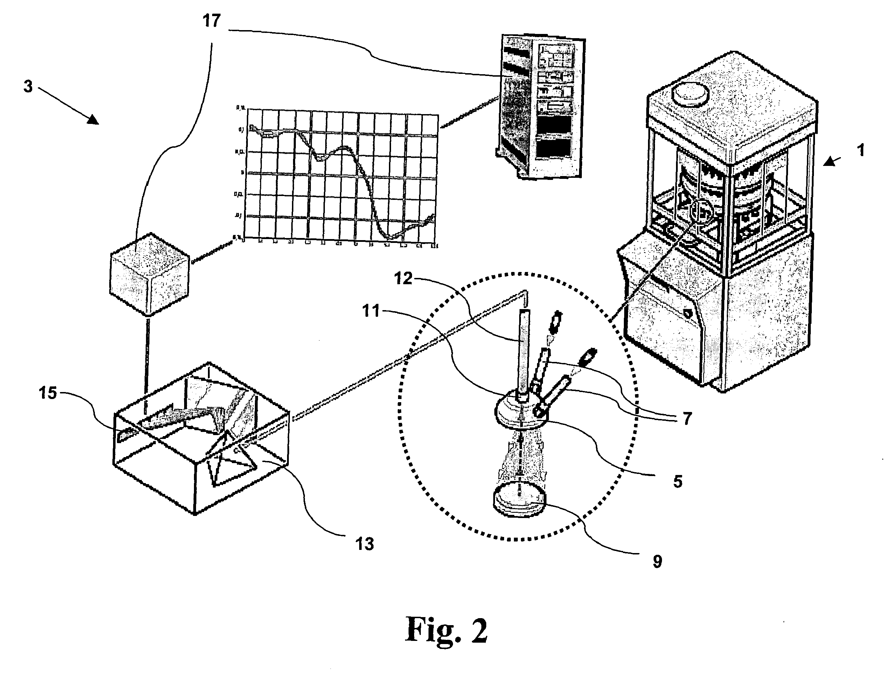

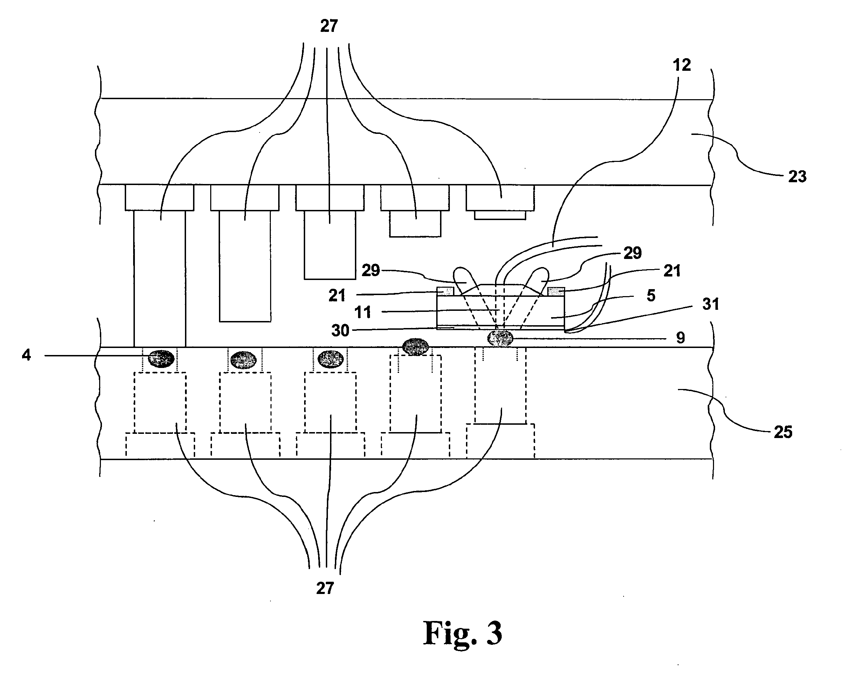

Fig. 2 zeigt schematisch den Ablauf der NIR-Messung mit einer bevorzugten Ausführungsform der NIR-Messvorrichtung 3. Die Elemente der integrierten NIR-Messvorrichtung 3 sind zum Zwecke der Anschaulichkeit einzeln dargestellt. Die NIR-Messvorrichtung 3 umfasst mindestens eine Strahlungsquelle 29 (Fig. 3) im nahen Infrarotbereich, beispielsweise eine Quecksilber-Halogenlampe oder eine Wolfram-Halogenlampe. Der Messkopf 5 ist beispielsweise fest innerhalb der Tablettenpresse 1 im Bereich zwischen den umlaufenden Pressstempeln angeordnet. Die von der Strahlungsquelle emittierte Nahinfrarot-Strahlung wird mittels z.B. zwei Lichtleitern 7 zum Messkopf 5 und von dort symmetrisch auf die bereits gepresste Tablette 4 geleitet. Alternativ können die Strahlungsquellen 29 auch am Messkopf 5 selbst angeordnet sein, um über eine geeignete Optik die Tablette 4 direkt zu bestrahlen, wie in Fig. 3 gezeigt ist.

Die von der Tablette 4 diffus reflektierte Strahlung wird in der Strahlungsempfangsvorrichtung 11, die ebenfalls am Messkopf 5 angeordnet ist, vorzugsweise von einer Sammellinse (nicht dargestellt) aufgenommen und mittels eines Lichtleiters 12 dem Spektrometer 13 zugeleitet. Im Spektrometer 13 wird die reflektierte Strahlung, welche die spektrale Information der bestrahlten Tablette 4 enthält, auf bekannte Weise, beispielsweise mittels eines Gitters, in Strahlung unterschiedlicher Wellenlängen aufgeteilt und von einem Photodiodenarray 15 detektiert. Der Strom von jeder Photodiode wird über einen vorgewählten Zeitraum (vorzugsweise kleiner 10 ms) integriert und die von dem Photodiodenarray 15 in Abhängigkeit von der Wellenlänge detektierten Intensitäten werden in der Bestimmungsvorrichtung 17 mittels eines A/D-Konverters in digitale Signale umgewandelt und per Computer ausgewertet.

Auf Basis des bei den unterschiedlichen Wellenlängen bereitgestellten Ausgangssignals wird in der Bestimmungsvorrichtung 17 mit einem mathematischen Verfahren die Konzentration des mindestens einen in der Tablette 4 enthaltenen Wirkstoffs bestimmt. Die Elektronik muss hierbei dazu geeignet sein, die Ausgangssignale vom Array 15 innerhalb von 1 ms abzuholen.

Geeignete mathematische Verfahren zur Bestimmung der relativen Konzentration des Wirkstoffs sind Verfahren zur multivariaten Datenanalyse. Geeignete Verfahren sind beispielsweise auch das PLS (partial least square)-Verfahren oder die Hauptkomponentenanalyse (PCA). Bei diesen Verfahren werden in der Regel die Differenzen zwischen einem auf bekannte Weise erhaltenen Modellspektrum und dem Spektrum der zu messenden Tablette 4 bei jeder gemessenen Wellenlänge berechnet. Die mathematischen Verfahren können Gewichtungsfaktoren verwenden, um den Einfluss von störenden, nicht auf die Zusammensetzung zurückzuführenden Variabilitäten in den aufgenommenen NIR-Spektren bei der Auswertung zu reduzieren und spektrale Merkmale hervorzuheben, die zwischen Proben des gleichen Tablettentyps nicht variieren.

Fig. 3 zeigt eine schematische Querschnittsansicht einer bevorzugten Ausführungsform der NIR-Messvorrichtung 3, bei der der Messkopf 5 mittels an sich bekannter Befestigungselemente 21 ortsfest an der Tablettenpresse 1 angebracht ist. Der obere bzw. untere Rundläufer 23, 25 weist eine festgelegte Anzahl von Pressstempeln 27 mit je nach gewünschter Tablettenform ausgestaltetem Querschnitt und Pressfläche auf. Während eines Herstellungsumlaufs wird jede einzelne Tablette 4 von den Pressstempeln 27 mit einem bestimmten Druckverlauf gepresst, so dass sie vor ihrem Auswurf eine definierte endgültige Form aufweist. Der obere bzw. untere Rundläufer 23, 25 bewegt sich dabei üblicherweise mit einer gleichmäßigen Geschwindigkeit. An einer definierten, für jede Tablette 4 identischen Freigabeposition geben die Pressstempel 27 die Tablette 4 frei. An genau dieser Position wird die ortsfeste NIR-Bestrahlung und -messung durch die auf dem Messkopf 5 angeordneten Elemente vorgenommen.

Um Verschmutzungen und damit verfälschte Messungen durch mögliche systematische Fehler zu vermeiden, ist an der Unterseite des Messkopfs 5 ein NIR-durchlässiges Glasfenster 30 angeordnet. Zusätzlich kann dieses eine selbstreinigende Oberfläche aufweisen, die in Nanotechnologie ausgeführt ist. In gleicher Weise kann der Messkopf 5 geeignet geformte Öffnungen 31 aufweisen, über die sich ein Luftvorhang zum Schutz vor Verschmutzungen einblasen bzw. Luft absaugen lässt. Damit ist sichergestellt, dass die optischen Elemente des Messkopfs 5 anhaltend gleiche Messbedingungen vorfinden.

Die Bestrahlung vorzugsweise jeder einzelnen Tablette 4 erfolgt wie erwähnt an einem festen Ort innerhalb der Rundläufer-Tablettenpresse 1, nämlich dort, wo die umlaufenden Pressstempel 27 die vollständig gepressten Tabletten 4 freigeben, bevor diese weitertransportiert werden. Es ist prinzipiell auch der Einsatz eines beweglichen Sensorkopfes denkbar, der einige Millisekunden mit der Tablette 4 mitläuft. Die Geometrie der Tablettenpresse 1, d.h. der Radius der Matrize und die genaue Position der Pressstempel 27 am Pressort, ist zusammen mit der Umlaufgeschwindigkeit der Tablettenpresse 1 ein Kriterium dafür, wie oft eine Messung ausgelöst werden muss. Der Eintritt einer für die Messung genau definierten Position auf der Tablette 4 (z.B. der Mittelpunkt der von oben sichtbaren Oberfläche) in den NIR-Strahl kennzeichnet den exakten Startzeitpunkt der Messung, den Auslösezeitpunkt.

Die Zeitspanne zwischen zwei Messungen wird durch die zeitlichen Abstände der Auslösezeitpunkte festgelegt. Mit einem Trigger, der über die erwähnten Eigenschaften und Einstellungen (Geschwindigkeit, Abmessungen etc.) der Tablettenpresse 1 automatisch berechnet und ausgelöst wird oder alternativ beim Durchlauf einer Tablette 4 durch eine bestimmte Position über eine Lichtschranke ausgelöst wird, wird der Integrationszeitraum gestartet.

Die über die NIR-Messung ermittelten Daten müssen anschließend über einen gewissen Zeitraum gespeichert werden, bis zur entsprechenden Tablette auch die Volumenmessungsergebnisse vorliegen. Auch hier erfolgt die korrekte Zuteilung der Ergebnisse unter Berücksichtigung der Geschwindigkeit der Tablettenpresse 1.

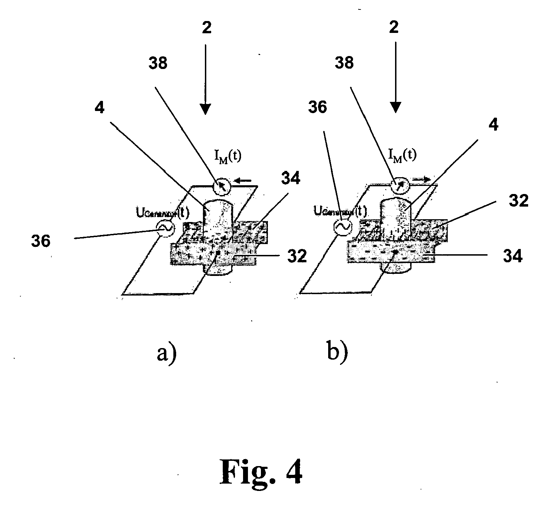

In Fig. 4 ist das Aufbauprinzip des Sensors 2 zur Volumenmessung skizziert. Der Sensor 2 ist als kapazitiver Messsensor ausgebildet und umfasst zwei Kondensatorplatten 32, 34, zwischen denen jede Tablette 4 auf ihrem Weg von der Ausgliederung aus der Tablettenpresse 1 in Richtung der Auswurfrinne 6 hindurchbewegt wird. Die Kondensatorplatten 32, 34 werden durch einen Spannungsgenerator 36 für Wechselspannung in sehr kurzen Abständen jeweils entgegengesetzt aufgeladen. In den beiden Teilfiguren sind jeweils die Ladungszustände der Kondensatorplatten 32, 34 bei Anliegen entgegengesetzter Spannung dargestellt. Im linken Abschnitt ist die Kondensatorplatte 32 positiv aufgeladen und die Kondensatorplatte 34 negativ aufgeladen, während im rechten Abschnitt die Kondensatorplatte 32 positiv und die Kondensatorplatte 34 negativ aufgeladen ist. Durch die Änderung der angelegten Spannung U_{Qenerator}(t) ergeben sich minimale Polarisationsänderungen in der an sich einen Isolator darstellenden Tablette 4 im elektrischen Wechselfeld. Diese minimalen Polarisationsänderungen können durch ein Strommessgerät 38 aufgenommen werden. Der gemessene Strom I_{M}(t) ist proportional zur Anzahl der geladenen Teilchen in der Tablette 4 und damit bei konstanter Dichte auch proportional zu ihrem Volumen.

Die Ausgestaltungen des Sensors 2 zur Volumenbestimmung sind vielfältig, solange der in Fig. 4 beschriebene Grundaufbau eingehalten wird. In jedem Fall müssen für die jeweilige Tablettensorte entsprechende Referenzmodelle aufgenommen werden, um den Sensor 2 für das jeweilige Anwendungsgebiet zu eichen. Es ist besonders wichtig, vorab auf getrenntem Wege die Dichte der gepressten Tablette 4 bei bestimmten Einstellungen der Tablettenpresse 1 zu bestimmen. Bei gleicher Einstellung der Presskraft der Tablettenpresse 1 kann dann unabhängig von der zugeführten Pulvermenge immer von einer konstanten Dichte der erzeugten Tablette 4 ausgegangen werden.

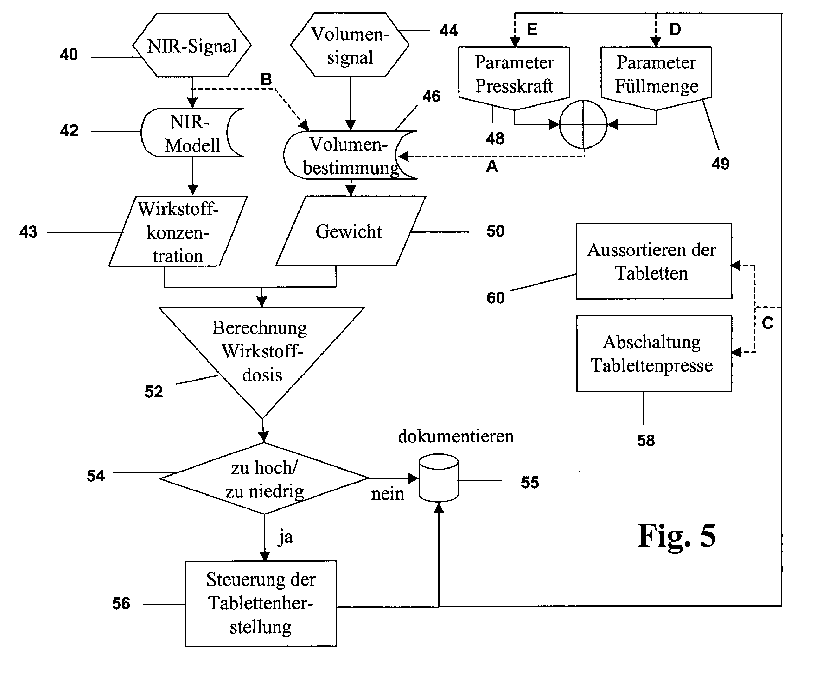

In Fig. 5 ist schematisch ein Ablaufdiagramm des Verfahrens zum Überprüfen von gepressten Tabletten 4 dargestellt. Zunächst wird mittels der NIR-Messvorrichtung 3 ein NIR-Signal aufgenommen (Schritt 40) und mit einem an das gewünschte Kriterium angepassten NIR-Modellspektrum verglichen (Schritt 42). Durch diesen Vergleich kann im Schritt 43 die Wirkstoffkonzentration in der jeweiligen Tablette 4 berechnet werden. Anschließend wird vom Sensor 2 zur Volumenbestimmung das Messsignal aufgenommen (Schritt 44) und durch Vergleich mit den Referenzwerten das tatsächliche Volumen der Tablette 4 während des Durchlaufs durch den Sensor 2 bestimmt (Schritt 46).

Um aus dieser Volumenangabe das Gewicht der jeweiligen Tablette 4 berechnen zu können, benötigt man zusätzlich Angaben zur Dichte, die in der Regel über Angaben zur Presskraft 48 der Tablettenpresse 1 vorliegen (gestrichelter Pfeil A). Auch die Füllmenge 49 des Tablettenpulvers in den Pressstempeln 27 der Tablettenpresse 1 kann von Bedeutung sein. Als Alternative ist es in bestimmten Fällen möglich, auch aus dem ermittelten NIR-Spektrum Angaben zur Tablettenhärte und damit zur Dichte der Tablette 4 abzuleiten, welche alternativ zu den Angaben hinsichtlich der Presskraft 48 zur Gewichtsbestimmung verwendet werden können, was durch Pfeil B angedeutet ist. Aus diesen Angaben wird das Gewicht vorzugsweise jeder einzelnen Tablette 4 berechnet (Schritt 50).

Das tatsächlich gewünschte Ergebnis, die absolute Wirkstoffdosis in der Tablette 4, erhält man nun durch Berechnung unter Einbeziehung der ermittelten Wirkstoffkonzentration und des ermittelten Gewichts (Schritt 52). Anschließend wird die Wirkstoffdosis mit Referenzwerten verglichen (Schritt 54), um zu bestimmen, ob die Wirkstoffdosis innerhalb der erlaubten Toleranzwerte liegt. Ist die Wirkstoffdosis im korrekten Bereich, wird dies lediglich in Schritt 55 dokumentiert. Falls die Wirkstoffdosis zu hoch oder zu niedrig ist, wird gemäß dem erfindungsgemäßen Verfahren Einfluss auf die Steuerung der Tablettenherstellung genommen (Schritt 56). Auch dieses Eingreifen wird wiederum dokumentiert.

Für die Steuerung der Tablettenherstellung bei fehlerhaften Tabletten gibt es verschiedene Möglichkeiten, die in Kombination miteinander oder einzeln im jeweiligen System vorgesehen sein können. So ist als einfachste Maßnahme gemäß Pfeil C die Abschaltung der Tablettenpresse (Schritt 58) denkbar, um die Produktion weiterer fehlerhafter Tabletten 4 zu verhindern. Gleichzeitig hierzu sollten die bereits produzierten fehlerhaften Tabletten 4 aussortiert werden (Schritt 60). Ebenfalls ist es möglich, aufgrund der berechneten Wirkstoffdosis die Parameter Füllmenge 49 (Pfeil D) und/oder Presskraft 48 (Pfeil E) der Tablettenpresse 1 gesteuert zu verändern, um so zu einer Produktion von im Toleranzbereich liegenden Tabletten 4 zu gelangen.

Üblicherweise werden Fehler bei der Tablettenherstellung durch Entmischung des Pulvers oder durch eine veränderte Füllmenge verursacht. Diese Mängel kann man durch das genannte Verfahren hervorragend detektieren.

Mit dem beschriebenen System kann eine Herstellung und exakte Analyse von mehr als 1.000.000 Tabletten pro Stunde erfolgen, wobei die Daten einer Tablette von der NIR-Messvorrichtung innerhalb eines Zeitfensters von weniger als 10 ms, bevorzugt weniger als 7 ms, und mehr bevorzugt weniger als 2 ms aufgenommen werden. Die Volumenmessung erfolgt genauso schnell. Zwischen den beiden Messungen für dieselbe Tablette 4 liegen üblicherweise Zeiträume von ca. 20 und 500 ms, sodass als gesamte Reaktionszeit des Systems von der Herstellung bis zur Auswertung einer schlechten Tablette ca. 70 bis 550 ms veranschlagt werden können. Nach dieser kurzen Zeit kann bereits eine Steuerung des Tablettierungsprozesses erfolgen.

Auch wenn das System als in eine Tablettenpresse integriert beschrieben wurde, kann das erfindungsgemäße System auch in einer beliebigen Position nach dem Auswurf der Tabletten aus der Tablettenpresse installiert sein, beispielsweise in einem Bereich des Transports der Tabletten von der Tablettenpresse zu Verpackungseinheiten.

Der Begriff "Tablette" soll jedes feste pharmazeutische Produkt umfassen.

## Patentansprüche

1. System zur Überprüfung von Tabletten, mit einer NIR-Messvorrichtung (3) zur Bestimmung der Konzentration mindestens eines Wirkstoffs in den Tabletten (4),
**dadurch gekennzeichnet, dass**
das System einen Sensor (2) zur Volumenbestimmung der jeweiligen Tablette (4) aufweist, und dass
das System außerdem eine Steuerungsvorrichtung (8) aufweist, welche geeignet ist, die absolute Wirkstoffdosis der Tablette (4) unter Berücksichtigung der von der NIR-Messvorrichtung (3) und dem Sensor (2) zur Volumenbestimmung ermittelten Daten zu berechnen.

2. System nach Anspruch 1, **dadurch gekennzeichnet, dass** das System außerdem eine Tablettenpresse (1) aufweist, in die die NIR-Messvorrichtung (3) integriert ist, dass der Sensor (2) zur Volumenbestimmung jeder Tablette (4) in dem Bereich des Auswurfs der Tabletten (4) von der Tablettenpresse (1) angeordnet ist und dass die Steuerungsvorrichtung (8) darauf ausgerichtet ist, auf Basis des berechneten Werts Einfluss auf die Steuerung des Herstellungsprozesses der Tabletten (4) zu nehmen.

3. System nach Anspruch 1 oder 2, **dadurch gekennzeichnet, dass** die NIR-Messvorrichtung (3) umfasst:
mindestens eine Strahlungsquelle (29), die Strahlung im nahen Infrarotbereich emittiert, zum Bestrahlen der Tablette (4);
einen Messkopf (5) mit einer darin enthaltenen Strahlungsempfangsvorrichtung (11), die die durch die Tablette (4) reflektierte Strahlung empfängt;
ein Spektrometer (13) zum Empfangen der Strahlung von der Strahlungsempfangsvorrichtung (11) und zum Bereitstellen eines Ausgangssignals entsprechend der Intensität der empfangenen Strahlung bei einer Anzahl unterschiedlicher Wellenlängen; und
eine Vorrichtung (17) zur Bestimmung der Konzentration mindestens eines in der Tablette (4) enthaltenen Wirkstoffs auf Basis des Ausgangssignals.

4. System nach Anspruch 3, **dadurch gekennzeichnet, dass** der Messkopf (5) der NIR-Messvorrichtung (3) ein NIR-durchlässiges Glasfenster (30) und Öffnungen (31) zum Einblasen eines Luftvorhangs oder zum Absaugen von Luft aufweist.

5. System nach einem der vorangehenden Ansprüche, **dadurch gekennzeichnet, dass** der Sensor (2) zur Volumenbestimmung ein kapazitiver Messsensor ist.

6. System nach Anspruch 5, **dadurch gekennzeichnet, dass** der Sensor (2) zur Volumenbestimmung einen Spannungsgenerator (36) für ein elektrisches Wechselfeld, zwei sich gegenüberliegende Kondensatorplatten (32, 34) und ein Strommessgerät (38) aufweist.

7. System nach Anspruch 2, **dadurch gekennzeichnet, dass** die Auslösezeitpunkte der Messungen der NIR-Messvorrichtung (3) mit der Fördergeschwindigkeit der Tablettenpresse (1) korreliert sind.

8. Verfahren zur Überprüfung von Tabletten, mit folgenden Schritten:
Bestimmen (43) der Konzentration mindestens eines Wirkstoffs in der jeweiligen Tablette (4) mittels einer NIR-Messvorrichtung (3),
Bestimmen (46) des Volumens der Tablette (4) durch einen Sensor (2), und
Berechnen (52) der absoluten Wirkstoffdosis der Tablette (4) unter Berücksichtigung der von der NIR-Messvorrichtung (3) und dem Sensor (2) zur Volumenbestimmung ermittelten Daten.

9. Verfahren nach Anspruch 8, **gekennzeichnet durch** den weiteren Schritt des Steuerns (56) des Herstellungsprozesses der Tabletten (4) auf Basis des berechneten Werts.

10. Verfahren nach Anspruch 8 oder 9, **dadurch gekennzeichnet, dass** der Schritt der Bestimmung (43) der Wirkstoffkonzentration in der Tablette (4) den Schritt aufweist, ein gemessenes NIR-Spektrum mit einem Modellspektrum zu vergleichen.

11. Verfahren nach einem der Ansprüche 8 bis 10, **dadurch gekennzeichnet, dass** nach dem Schritt der Volumenbestimmung (46) das Gewicht der Tablette (4) aus dem bestimmten Volumen der Tablette (4) mit Hilfe von Angaben zur Dichte der Tablette (4), die aus der Presskraft (48) der Tablettenpresse (1) und/oder aus dem durch die NIR-Messvorrichtung (3) bestimmten Spektrum ermittelbar sind, bestimmt wird (50).

12. Verfahren nach Anspruch 9, **dadurch gekennzeichnet, dass** der Schritt (56) des Steuerns des Herstellungsprozesses mindestens einen der folgenden Schritte aufweist:
Abschalten (58) der Tablettenpresse (1),
Einstellen der Presskraft (48) der Pressstempel (27) der Tablettenpresse (1), und
Einstellen der Füllmenge (49) des Tablettenpulvers.
